# EUROPEAN PATENT APPLICATION

(11) **EP 4 501 137 A1**
(43) Date of publication of application: **05.02.2025**
(21) Application number: 23781039.5
(22) Date of filing: 31.03.2023
(51) Int. Cl.: A23L 29/10, A23C 11/10, A23D 7/00, A23D 7/005, A23F 5/24, A23L 2/00, A23L 2/38, A23L 2/52, A23L 9/20

(54) **OIL-IN-WATER TYPE EMULSION COMPOSITION AND BEVERAGE CONTAINING SAME**

(30) Priority: 31.03.2022 JP 2022060167
(71) Applicant: Mitsubishi Chemical Corporation, Tokyo 100-8251 (JP)
(72) Inventor: HARA, Hideyuki, Tokyo 100-8251 (JP); MATSUURA, Tsutashi, Tokyo 100-8251 (JP)
(74) Representative: Vossius & Partner Patentanwälte Rechtsanwälte mbB
(86) International application number: PCT/JP2023/013476
(87) International publication number: WO 2023/191031

(57) **Abstract**

Provided is an oil-in-water emulsion composition comprising water, an oil-and-fat, a pea protein and/or a fava protein, and a sucrose fatty acid ester, wherein the sucrose fatty acid ester has a ratio of a sucrose fatty acid monoester with respect to the total sucrose fatty acid ester of 3 to 45% by mass, and an amount of the sucrose fatty acid ester is 1 to 30 parts by mass with respect to 1 part by mass of a total amount of the pea protein and the fava protein.

## Description

### TECHNICAL FIELD

The present invention relates to an oil-in-water emulsion composition, and relates to a beverage containing the emulsion composition.

### BACKGROUND ART

Milk proteins such as casein have both high emulsifiability and solubility and, therefore, are widely used for raw materials of creamer used in coffee or black tea. It is known that use of sucrose fatty acid esters which are highly hydrophilic in combination with milk proteins improves dispersion stability of oil droplets in beverages, and it is known that an excellent effect is exerted when such sucrose fatty acid esters are added in a smaller amount than milk proteins, thereby (for example, Patent Documents 1 to 3). Foods in which sucrose fatty acid esters which are highly hydrophilic and milk proteins are used in combination are also studied (Patent Documents 4 and 5). Beverages or foods with milk proteins, if eaten by persons with milk allergy, cause severe problems, and therefore there is a need for beverages or foods with plant proteins.

Plant-derived proteins such as soy proteins or pea proteins can be used as substitutes for milk proteins.

For example, Patent Documents 6, 7, and 8 each propose an oil-in-water emulsion composition containing a pea protein and an emulsifier such as a sucrose fatty acid ester.

### RELATED ART DOCUMENT

### PATENT DOCUMENT

Patent Document 1: Japanese Examined Patent Publication No. H07-28658
Patent Document 2: Japanese Unexamined Patent Publication No. 2022-1433
Patent Document 3: Japanese Unexamined Patent Publication No. 2002-355013
Patent Document 4: Japanese Unexamined Patent Publication No. 2009-165369
Patent Document 5: Japanese Unexamined Patent Publication No. 2020-14417
Patent Document 6: Japanese Unexamined Patent Publication No. 2005-341933
Patent Document 7: International Publication WO 2021/066005
Patent Document 8: Japanese Unexamined Patent Publication No. 2021-503918

### SUMMARY OF THE INVENTION

### PROBLEMS TO BE SOLVED BY THE INVENTION

However, all techniques of conventional oil-in-water emulsion compositions in which plant-derived proteins such as soy proteins or pea proteins and sucrose fatty acid esters are blended have the problem of causing aggregation and/or oil and fat separation due to shaking during distribution to result in deterioration in quality.

In view of the above problems of the conventional techniques, an object of the present invention is to provide an oil-in-water emulsion composition which is in a stabilized emulsified state and is more excellent in distribution stability even if a pea protein and/or a fava protein and a sucrose fatty acid ester are used, and a beverage with the oil-in-water emulsion composition.

### MEANS FOR SOLVING THE PROBLEMS

The present inventors have focused on blending of a large amount of plant-derived proteins such as soy proteins and/or pea proteins and blending of a small amount of sucrose fatty acid esters which are highly hydrophilic in techniques of conventional oil-in-water emulsion compositions. Soy proteins include a large amount of high-molecular weight proteins, for example, β-conglycinin (molecular weight of about 150,000) and glycinin (molecular weight of about 43,000), and pea proteins include a large amount of high-molecular weight proteins, for example, convicilin (molecular weight of about 75,000) and vicilin (molecular weight of about 4,5000). Such proteins have the disadvantage of being hardly dispersed in water and being low in emulsifying capacity as compared with milk proteins containing a large amount of relatively-low-molecular weight proteins such as casein (molecular weight of 25000) and β-lactoglobulin (molecular weight of about 18300). Therefore, conventional oil-in-water emulsion compositions have been considered to easily cause aggregation and/or oil and fat separation.

The present inventors have found that an emulsion composition which is in a more highly stabilized emulsified state and has excellent distribution stability is obtained by blending a sucrose fatty acid ester having a specific small amount of a sucrose fatty acid monoester in terms of composition, with a pea protein and/or a fava protein, to blend the pea protein and/or the fava protein with the sucrose fatty acid ester at a specific ratio, and thus the above problems can be solved.

The present invention has been achieved based on such findings, and the gist thereof is as follows.

[1] An oil-in-water emulsion composition including water, an oil-and-fat, a pea protein and/or a fava protein, and a sucrose fatty acid ester, wherein the sucrose fatty acid ester has a ratio of a sucrose fatty acid monoester with respect to the total sucrose fatty acid ester of 3 to 45% by mass, and an amount of the sucrose fatty acid ester is 1 to 30 parts by mass with respect to 1 part by mass of a total amount of the pea protein and the fava protein.
[2] The oil-in-water emulsion composition according to [1], wherein a content of a milk protein is 0.5% by mass or less.
[3] The oil-in-water emulsion composition according to [1] or [2], containing no milk protein.
[4] The oil-in-water emulsion composition according to any of [1] to [3], for a beverage.
[5] The oil-in-water emulsion composition according to [1] or [2], wherein a content of a saturated fatty acid in a constituent fatty acid of the oil-and-fat is 80% by mass or more.
[6] The oil-in-water emulsion composition according to any of [1] to [5], wherein the oil-and-fat has a content of 25 to 50% by mass.
[7] The oil-in-water emulsion composition according to any of [1] to [6], further including a glycerin fatty acid ester.
[8] A beverage including the oil-in-water emulsion composition according to any of [1] to [7].
[9] A beverage including 0.2 to 42% by mass of the oil-in-water emulsion composition according to any of [1] to [7].
[10] A beverage including water, an oil-and-fat, a pea protein and/or a fava protein, and a sucrose fatty acid ester, wherein the sucrose fatty acid ester has a ratio of a sucrose fatty acid monoester with respect to the total sucrose fatty acid ester of 3 to 45% by mass, and an amount of the sucrose fatty acid ester is 1 to 30 parts by mass with respect to 1 part by mass of a total amount of the pea protein and the fava protein.

### ADVANTAGEOUS EFFECTS OF INVENTION

According to the present invention, it is possible to provide an oil-in-water emulsion composition which is in a highly stabilized emulsified state and has an excellent distribution stability, and a beverage including the oil-in-water emulsion composition.

According to the aspect of [6], an emulsion composition having a higher concentration of the oil-and-fat is obtained, thereby allowing for an enhancement in transport efficiency per the oil-and-fat and a reduction in storage space of the oil-in-water emulsion composition.

Furthermore, according to the aspects of [8] and [9], a beverage higher in stability at high temperature is obtained.

### MEANS FOR SOLVING THE PROBLEMS

Hereinafter, embodiments of the present invention are described in detail, but the description of constituent requirements described below is one example (representative example) of aspects for carrying out the present invention, and the present invention is not limited to these descriptions. When the expression "to" is herein used, the expression is intended to be used as an expression encompassing the numerical values or the physical property values before and after "to".

### [Oil-in-water emulsion composition]

An oil-in-water emulsion composition according to one embodiment of the present invention is an oil-in-water emulsion composition including water, an oil-and-fat, a pea protein and/or a fava protein, and a sucrose fatty acid ester, wherein the sucrose fatty acid ester has a ratio of a sucrose fatty acid monoester with respect to the total sucrose fatty acid ester (hereinafter, sometimes simply referred to as "sucrose fatty acid monoester ratio".) of 3 to 45% by mass, and an amount of the sucrose fatty acid ester is 1 to 30 parts by mass with respect to 1 part by mass of a total amount of the pea protein and the fava protein.

### <Oil-and-fat>

A higher content of the oil-and-fat in the oil-in-water emulsion composition of the present embodiment leads to an enhancement in transport efficiency per an oil-and-fat and a reduction in storage space of the oil-in-water emulsion composition. The content of the oil-and-fat in the oil-in-water emulsion composition is preferably 25% by mass or more, more preferably 31% by mass or more, further preferably 33% by mass or more from this viewpoint. In this regard, the content of the oil-and-fat in the oil-in-water emulsion composition is preferably 50% by mass or less, more preferably 46% by mass or less, further preferably 41% by mass or less, most preferably 38% by mass or less, from the viewpoint that the effect of enhancing stability during distribution, by the pea protein and/or fava protein and the sucrose fatty acid ester used in the present invention, is sufficiently obtained.

Accordingly, lipid-containing components described below, such as an oil-and-fat, and a milk component, may be blended in the oil-in-water emulsion composition of the present embodiment so that the content of the oil-and-fat in the beverage obtained is within the above suitable range.

The content of the oil-and-fat in the oil-in-water emulsion composition can be determined by calculation from the proportion of the oil-and-fat in each component included in the oil-in-water emulsion composition and the content rate of such each component.

Any known oil-and-fat can be used as the oil-and-fat. For example, the oil-and-fat may be animal oil-and-fat, such as fish oil, beef tallow, lard, cream (butter or anhydrous butter), horse oil, snake oil, egg oil, egg-yolk oil, turtle oil, or mink oil, and, in the case of a food for persons having milk allergy, plant oil-and-fat are preferably used, and examples thereof include plant oil-and-fat, such as soy oil, corn oil, cotton seed oil, canola oil, sesame oil, perilla oil, rice oil, sunflower oil, peanut oil, olive oil, palm oil, palm kernel oil, rice germ oil, wheat germ oil, brown rice germ oil, coix lacryma-jobi ma-yuen seed oil, garlic oil, macadamia nut oil, avocado oil, evening primrose oil, safflower oil, camellia oil, coconut oil, castor oil, flaxseed oil, and cacao oil: and hydrogenated or esterified oils thereof, for example, hydrogenated oil, and processed oil-and-fat, obtained by subjecting liquid or solid products of these plant oils-and-fats to oil-and-fat processing such as purification, deodorizing, fractionation, hydrogenation, and/or esterification, for example, MCT (medium-chain fatty acid oil), hydrogenated coconut oil, and hydrogenated palm kernel oil, and also liquid oil and solid lipid obtained by further fractionation of such an oil-and-fat; as well as medium-chain fatty acid triglyceride.

In particular, corn oil, cotton seed oil, canola oil, perilla oil, rice oil, sunflower oil, olive oil, palm oil, palm kernel oil, rice germ oil, brown rice germ oil, coix lacryma-jobi ma-yuen seed oil, garlic oil, avocado oil, evening primrose oil, safflower oil, camellia oil, coconut oil, castor oil, flaxseed oil, cacao oil, and hydrogenated or esterified products thereof are preferred from the viewpoint of containing no substance that triggers allergies. Furthermore, palm kernel oil, coconut oil, and hydrogenated or esterified products thereof are preferred, and hydrogenated palm kernel oil and hydrogenated coconut oil respectively obtained by hydrogenation of palm kernel oil and coconut oil are most preferred, from the viewpoint of taste or oxidation degradation of the oil-in-water emulsion composition which is made from them.

The oil-in-water emulsion composition of the present embodiment may include only one, or two or more of these oils-and-fats.

The oil-and-fat in the oil-in-water emulsion composition of the present embodiment is used so that the content of the oil-and-fat in the oil-in-water emulsion composition or the beverage is within the above suitable range in terms of the total with any lipid contained in other lipid-containing component, for example, a milk/soymilk component described below.

In particular, in the case where a plant oil-and-fat is used, the oil-in-water emulsion composition preferably includes the plant oil-and-fat at a content of 50% by mass or more, further preferably 70% by mass or more, and most preferably 90% by mass or more with respect to the oil-and-fat because of providing a light drink taste when drunk as a beverage, and of easily providing a preferred taste.

The content of a saturated fatty acid in a constituent fatty acid of the oil-and-fat included in the oil-in-water emulsion composition is preferably 80% by mass or more, further preferably 90% by mass or more, and most preferably 95% by mass or more because a good taste is achieved and taste degradation during long-term storage is reduced. The upper limit is 100% by mass.

The SFC (solid fat content) at 20°C of the oil-and-fat in the oil-in-water emulsion composition of the present embodiment is preferably 30% by mass or more, and further preferably 40% by mass or more because an excellent drink taste is achieved when added to a beverage. On the other hand, the SFC is usually 60% by mass or less, preferably 55% by mass or less.

The oil-and-fat in the oil-in-water emulsion composition of the present embodiment has a slip melting point of preferably 0°C or more, more preferably 10°C or more, and further preferably 15°C or more because a good taste is achieved and taste degradation during long-term storage is reduced. The slip melting point can be measured according to a method in "Japan Oil Chemists' Society, Standard methods for the analysis of fats, oils and related material 2.2.4.2 (1996)".

### <Sucrose fatty acid ester>

The sucrose fatty acid ester used in the present invention has a ratio of a sucrose fatty acid monoester with respect to the total sucrose fatty acid ester of 3 to 45% by mass. The pea protein and the fava protein usually have a higher molecular weight and lower hydrophilicity as compared with milk proteins, and thus these proteins can be arranged at an oil-water interface by use of the sucrose fatty acid ester in which the ratio of the sucrose fatty acid monoester is within the above range.

The ratio of the sucrose fatty acid monoester contained in the sucrose fatty acid ester with respect to the total sucrose fatty acid ester is preferably 9% by mass or more, more preferably 15% by mass or more, further preferably 20% by mass, and particularly preferably 25% by mass, from the viewpoint of distribution stability of the oil-in-water emulsion composition. On the other hand, the ratio is preferably 45% by mass or less, and more preferably 42% by mass or less. In other words, the ratio is preferably 9 to 45% by mass, more preferably 15 to 45% by mass, further preferably 20 to 42% by mass, and particularly preferably 25 to 42% by mass. The ratio of the sucrose fatty acid monoester can be determined from the area ratio in a chromatogram in GPC analysis with tetrahydrofuran (THF) or the like as an elution liquid. In a case where a plurality of sucrose fatty acid esters in which the ratio of the sucrose fatty acid monoester is known is used in combination, the ratio of the sucrose fatty acid monoester in the oil-in-water emulsion composition can be calculated from the blending proportion of the sucrose fatty acid esters.

Known fatty acid such as palmitic acid, stearic acid, or oleic acid is used in a fatty acid-derived structural unit in the sucrose fatty acid ester. Specific examples of the sucrose fatty acid ester include a sucrose palmitic acid ester, a sucrose stearic acid ester, a sucrose myristic acid ester, and a sucrose oleic acid ester. In particular, a sucrose palmitic acid ester or a sucrose stearic acid ester is preferred, and a sucrose stearic acid ester is most preferred, from the viewpoint of the taste and stability of the oil-in-water emulsion composition.

The sucrose fatty acid ester is an emulsifier known itself for foods, and a commercially available sucrose fatty acid ester can be used. Examples include "RYOTO Sugar Ester S-1670", "RYOTO Sugar Ester S-1570", "RYOTO Sugar Ester P-1670", "RYOTO Sugar Ester M-1695", "RYOTO Sugar Ester S-1170", "RYOTO Sugar Ester S-970", "RYOTO Sugar Ester S-770", "RYOTO Sugar Ester S-570", "RYOTO Sugar Ester S-370", "RYOTO Sugar Ester S-270", and "RYOTO Sugar Ester L-595", (all are manufactured by Mitsubishi Chemical Corporation, trade names); and "DK Ester SS", "DK Ester F-160", "DK Ester F-140", and "DK Ester F-110" (all are manufactured by DKS Co., Ltd., trade names). The oil-in-water emulsion composition of the present embodiment may include one, or two or more of sucrose fatty acid ester(s) as long as the sucrose fatty acid monoester ratio is within a range of 3 to 45% by mass.

As the sucrose fatty acid ester, a sucrose fatty acid ester with a high selectivity of monoester, which is produced by irradiation with microwave as described in Japanese Patent No. 5945756, may be used.

In the oil-in-water emulsion composition of the present embodiment, the content of the sucrose fatty acid ester in which the sucrose fatty acid monoester ratio is 3 to 45% by mass is preferably 0.05% by mass or more, furthermore preferably 0.1% by mass or more, more preferably 0.4% by mass or more, further preferably 0.7% by mass or more, and particularly preferably 1% by mass or more. On the other hand, in the oil-in-water emulsion composition of the present embodiment, the content of the sucrose fatty acid ester in which the sucrose fatty acid monoester ratio is 3 to 45% by mass is preferably 5% by mass or less, more preferably 4% by mass or less, and further preferably 3% by mass or less. When the content of the sucrose fatty acid ester is within the above preferred range, an adequate effect of enhancing stability during distribution, by the sucrose fatty acid ester, can be obtained, and an adequate taste of the oil-in-water emulsion composition tends to be maintained.

### <Pea protein, fava protein>

The pea protein and the fava protein used in the oil-in-water emulsion composition or the beverage of the present invention refer to known food materials which respectively contain pea beans and fava beans as raw materials and are for use as raw materials for various processed foods and/or beverages. For example, the pea protein is prepared from a pea raw material by further protein extraction, separation and concentration, and examples generally include a separated pea protein, a concentrated pea protein, or variously processed products thereof.

In particular, the pea protein is preferably used from the viewpoint of distribution stability of the oil-in-water emulsion composition.

It is herein preferable to exclude a protein particle produced by a production method including a step of mixing water and a protein to obtain a mixed liquid, and a step of heat-treating the mixed liquid at 60°C or more and 200°C or less for one second or more and 120 minutes or less.

The pea protein and the fava protein are preferably included at a proportion of 0.05% by mass or more, further preferably 0.1% by mass or more, and most preferably 0.15% by mass or more from the viewpoint of distribution stability of the oil-in-water emulsion composition. On the other hand, the proteins are preferably included at a proportion of 3% by mass or less, more preferably 2% by mass or less, further preferably 1% by mass or less, particularly preferably 0.6% by mass or less, and most preferably 0.45% by mass or less from the viewpoint of allowing the viscosity of the oil-in-water emulsion composition to be adequately kept.

The oil-in-water emulsion composition of the present embodiment may include one, or two or more of these proteins. When two or more of these proteins are included, the content may be within a range in the case of single use of any substance exemplified above, or may be within a range of the total amount in the case of combination use of a plurality thereof.

The content of the pea protein and/or fava protein in the oil-in-water emulsion composition can be determined by calculation from the protein proportion of a protein-containing component in the oil-in-water emulsion composition and the content rate of this component.

The amount of the sucrose fatty acid ester is 1 to 30 parts by mass with respect to 1 part by mass of a total amount of the pea protein and the fava protein in the oil-in-water emulsion composition of the present embodiment. The amount of the sucrose fatty acid ester is preferably 1.37 parts by mass or more, more preferably 3 parts by mass or more, and further preferably 3.3 parts by mass or more with respect to 1 part by mass of a total amount of the pea protein and the fava protein in the oil-in-water emulsion composition of the present embodiment from the viewpoint of distribution stability. On the other hand, the amount is preferably 20 parts by mass or less, more preferably 15 parts by mass or less, and further preferably 10 parts by mass or less. In other words, the amount is preferably 1.37 to 20 parts by mass, more preferably 3 to 15 parts by mass, and further preferably 3.3 to 10 parts by mass. Although plant proteins such as the pea protein and the fava protein are easily aggregated in water, such aggregation is likely to be prevented by setting the amount of the sucrose fatty acid ester to an amount equal to or more than the amount of these proteins.

The oil-in-water emulsion composition of the present embodiment preferably contains substantially no milk protein from the viewpoint of environmental load and allergy. Specifically, the content of the milk protein is preferably 0.5% by mass or less, more preferably 0.01% by mass or less, and no milk protein is most preferably contained.

The median size of an oil-and-fat phase in the oil-in-water emulsion composition of the present embodiment is preferably 0.2 µm or more, more preferably 0.5 µm or more, and particularly preferably 0.8 µm or more as a value obtained by measurement with a laser diffraction/scattering type particle size distribution measurement apparatus (manufactured by HORIBA Ltd.). On the other hand, the median size is preferably 3 µm or less, more preferably 2.5 µm, and particularly preferably 1.8 µm. In other words, the median size is preferably 0.2 to 3 µm, further preferably 0.5 to 2.5 µm, particularly preferably 0.8 to 1.8 µm.

The oil-in-water emulsion composition of the present embodiment can be used as a creamer in coffee, a coffee beverage, a soft drink with coffee, a tea beverage, a cocoa beverage, a corn soup, a milk beverage, an almond beverage, an oat beverage, a coconut beverage, rice milk, cashew nut milk, hemp milk, pea milk, a walnut beverage, soymilk, pistachio milk, barley milk, macadamia milk, a fruit juice drink, or the like.

The oil-in-water emulsion composition of the present embodiment is preferably used in coffee, a coffee beverage, a soft drink with coffee, a tea beverage, a cocoa beverage, an almond beverage, an oat beverage, or pea milk, particularly preferably used in a coffee beverage, a tea beverage, an almond beverage, or an oat beverage, further preferably used in a coffee beverage from the viewpoint of the taste.

### <Other blending agent>

The oil-in-water emulsion composition of the present embodiment may include an emulsifier other than the sucrose fatty acid ester, a milk component, a plant material other than the pea protein and the fava protein, and other blending agent such as a stabilizer and/or a pH adjuster, as appropriate. The content of the other blending agent in the oil-in-water emulsion composition is usually 0 to 5% by mass, and preferably 0 to 3% by mass.

### (Emulsifier other than sucrose fatty acid ester)

The oil-in-water emulsion composition of the present embodiment may include, in addition to the sucrose fatty acid ester, an emulsifier for foods, from the viewpoint of emulsification stability or the like during long-term storage. The emulsifier for foods in the present invention is not particularly limited as long as it is an emulsifier available for foods, and any appropriate emulsifier can be selected in consideration of the effects exerted by the present invention. Examples of the emulsifier for foods include fatty acid ester compounds such as glycerin fatty acid esters (monoglyceride, organic acid monoglyceride, polyglycerin fatty acid ester, and the like), polysorbates (polyoxyethylene sorbitan fatty acid ester), sorbitan fatty acid esters, propylene glycol fatty acid esters, stearoyl lactylates (sodium stearoyl lactylate, calcium stearoyl lactylate, and the like), enzyme-degraded lecithin, and lecithin; and saponin. These emulsifiers for foods may be used singly or in combination of two or more kinds thereof.

Glycerin fatty acid esters are preferred, further preferably any one, or two or more of monoglyceride, organic acid monoglyceride, and polyglycerin fatty acid ester are preferably used in combination, and organic acid monoglyceride is further preferably used, from the viewpoint of emulsification stability during long-term storage.

In a case where the oil-in-water emulsion composition includes other emulsifier than the sucrose fatty acid ester, the content is preferably 0.01% by mass or more, more preferably 0.05% by mass, and further preferably 0.08% by mass or more with respect to the oil-in-water emulsion composition. On the other hand, the content is preferably 2% by mass or less, more preferably 1% by mass or less, and further preferably 0.5% by mass or less. In other words, the content is preferably 0.01 to 2% by mass, more preferably 0.05 to 1% by mass, further preferably 0.08 to 0.5% by mass.

### (Milk component)

Examples of the milk component that can be included in the oil-in-water emulsion composition of the present embodiment include milk components such as milk, whole milk, skim milk, concentrated milk, concentrated skim milk, condensed milk, condensed skim milk, powdered whole milk, powdered skim milk, fresh cream, butter, butter oil, buttermilk, buttermilk powder, casein and casein salt, whey, cheese, and whey mineral.

The oil-in-water emulsion composition of the present embodiment preferably includes 0 to 0.5% by mass of the milk component, from the viewpoint of a decrease in amount of water for producing raw materials and a reduction in load on the environment. Furthermore, the oil-in-water emulsion composition preferably contains no milk component from the viewpoint of providing a milk substitute.

### (Plant material other than pea protein and fava protein)

The oil-in-water emulsion composition of the present embodiment may include a plant material other than the pea protein and the fava protein. Examples of the plant material other than the pea protein and the fava protein include soy, almond, oat, brown rice, hemp and processed products thereof.

The oil-in-water emulsion composition of the present embodiment preferably contains 0 to 0.5% by mass of soy and almond, and processed products thereof, from the viewpoint of a decrease in amount of water for producing raw materials and a reduction in load on the environment. Furthermore, the oil-in-water emulsion composition preferably does not contain soy and almond, and processed products thereof, from the viewpoint of providing a soy product substitute.

### (Stabilizer)

The oil-in-water emulsion composition of the present embodiment may include a stabilizer. Examples of the stabilizer include carrageenan, xanthane gum, guar gum, tara gum, tamarind seed gum, psyllium seed gum, pectin, locust bean gum, curdlan, and microcrystalline cellulose.

### (pH adjuster)

The oil-in-water emulsion composition of the present embodiment may include a pH adjuster such as an organic acid and a salt thereof, soda, and phosphate.

In a case where the oil-in-water emulsion composition includes a pH adjuster, the content thereof is preferably 0.001% by mass or more, more preferably 0.005% by mass or more, and further preferably 0.01% by mass or more with respect to the oil-in-water emulsion composition. On the other hand, the content is preferably 0.3% by mass or less, more preferably 0.2% by mass or less, and further preferably 0.1% by mass or less. In other words, the content is preferably 0.001 to 0.3% by mass, more preferably 0.005 to 0.2% by mass, further preferably 0.01 to 0.1% by mass.

### (Others)

As with any other blending agent, not only the blending agent(s) exemplified above but also a saccharide, a sugar alcohol, a sweetener, a flavoring, a flavoring material, a mineral material, a nutritive material, an antioxidant, a preservation agent, and/or alcoholic liquor may be included.

Examples of the saccharide include sugar, granulated sugar, monosaccharides and oligosaccharides, such as fructose, glucose, maltose, galactose, mannose, fucose, xylose, trehalose, lactose, mannooligosaccharide, and maltooligosaccharide.

Examples of the sugar alcohol include sugar alcohols such as erythritol, xylitol, maltitol, sorbitol, mannitol, and inositol.

Examples of the sweetener include sucralose, aspartame, acesulfame potassium, neotame, and a stevia extract.

Examples of the flavoring include lemon oil, orange oil, mint oil, a coffee flavor, a black tea flavor, a butter flavor, a cream flavor, and a milk flavor.

Examples of the flavoring material include carotenoids such as β-carotene, astaxanthin, lycopene, and a paprika pigment, pigments such as chlorophyll, and common salt.

Examples of the mineral material include salts of calcium, iron, magnesium, potassium, and the like.

Examples of the nutritive material include vitamins, coenzyme Q10, amino acid, peptide, DHA, and EPA.

Examples of the antioxidant include vitamin C, vitamin C sodium, vitamin E, a rosemary extract, a tea extract, and a bayberry extract.

Examples of the preservation agent include duration improvers such as a mustard extract and lysozyme, nisin, sorbic acid, and a salt thereof.

Examples of the alcoholic liquor include liqueur, vodka, and distilled spirit.

### <Beverage>

A beverage according to one embodiment of the present invention includes the oil-in-water emulsion composition, namely, an oil-in-water emulsion composition including water, an oil-and-fat, a pea protein and/or a fava protein, and a sucrose fatty acid ester, in which the sucrose fatty acid ester has a ratio of a sucrose fatty acid monoester with respect to the total sucrose fatty acid ester of 3 to 45% by mass.

A beverage according to one embodiment of the present invention may be a beverage including water, an oil-and-fat, a pea protein and/or a fava protein, and a sucrose fatty acid ester, in which the sucrose fatty acid ester has a ratio of a sucrose fatty acid monoester with respect to the total sucrose fatty acid ester of 3 to 45% by mass, and the amount of the sucrose fatty acid ester is 1 to 30 parts by mass with respect to 1 part by mass of a total amount of the pea protein and the fava protein.

The content of an oil-in-water emulsion composition according to one embodiment of the present invention in the beverage of the present embodiment is preferably 0.2% by mass or more, more preferably 0.8% by mass or more, and further preferably 1.5% by mass or more from the viewpoint of sufficiently providing the emulsification stability during long-term storage. On the other hand, the content is preferably 42% by mass or less, more preferably 30% by mass or less, further preferably 15% by mass or less, particularly preferably 10% by mass or less, and most preferably 5% by mass or less.

The content of the oil-and-fat in the beverage of the present embodiment is preferably 0.1% by mass or more, more preferably 0.3% by mass or more, and further preferably 0.5% by mass or more from the viewpoint of sufficiently providing the emulsification stability during long-term storage. On the other hand, the content is preferably 15% by mass or less, more preferably 10% by mass or less, further preferably 5% by mass or less, particularly preferably 3% by mass or less, and most preferably 2% by mass or less.

The beverage of the present embodiment preferably includes 0.001% by mass or more, more preferably 0.002% by mass or more, and further preferably 0.003% by mass or more of the pea protein and/or the fava protein from the viewpoint of sufficiently obtaining the emulsification stability during long-term storage. On the other hand, the beverage preferably includes 0.3% by mass or less, more preferably 0.1% by mass or less, and further preferably 0.07% by mass or less of the pea protein and/or the fava protein from the viewpoint of an improvement in drink taste.

The contents of the oil-and-fat and the pea protein and/or fava protein in the beverage can be determined by calculation from the protein proportion in a protein-containing component in the beverage, and the content rate of this component.

The beverage of the present embodiment may include other sucrose fatty acid ester than that derived from an oil-in-water emulsion composition according to one embodiment of the present invention. The other sucrose fatty acid ester than that derived from the oil-in-water emulsion composition can be the same as the above sucrose fatty acid ester. Among them, a sucrose palmitic acid ester or a sucrose stearic acid ester is preferred, and a sucrose palmitic acid ester is most preferred from the viewpoint of the taste and stability of the beverage.

The content of the sucrose fatty acid ester in the beverage of the present embodiment is preferably 0.001% by mass or more, more preferably 0.01% by mass or more, further preferably 0.03% by mass or more, and particularly preferably 0.05% by mass or more. On the other hand, the content of the sucrose fatty acid ester in the beverage of the present embodiment is preferably 3% by mass or less, more preferably 1% by mass or less, further preferably 0.5% by mass or less, particularly preferably 0.3% by mass or less, especially preferably 0.2% by mass or less, and most preferably 0.15% by mass or less. In a case where the beverage of the present embodiment includes other sucrose fatty acid ester than that derived from an oil-in-water emulsion composition according to one embodiment of the present invention, the content of the sucrose fatty acid ester is the total amount of the other sucrose fatty acid ester and the sucrose fatty acid ester included an oil-in-water emulsion composition according to one embodiment of the present invention. When the content of the sucrose fatty acid ester is set within the above preferred range, an adequate emulsification stability effect during long-term storage, by the sucrose fatty acid ester, can be obtained, and an adequate taste of the beverage tends to be kept.

The beverage of the present embodiment preferably contains a sucrose fatty acid ester having an HLB of 10 to 17, more preferably contains a sucrose fatty acid ester having an HLB of 13 to 17, and further preferably contains a sucrose fatty acid ester having an HLB of 16, from the viewpoint of product quality at high temperature.

The HLB of "RYOTO (registered trademark) Sugar Ester" is described in the catalog (see the homepage of Mitsubishi Chemical Corporation, http://www.mfc.co.jp/product/nyuuka/ryoto_syuga/list.html) to be an approximate number (as a numerical value marked with "about"), and such a numerical value can be regarded as the HLB of the emulsifier for foods (fatty acid ester compound) in the present invention. Even in a case where other product is used as the emulsifier for foods, the catalog value can be seen as the HLB. In a case where the catalog value is not clear or in a case where the emulsifier for foods is synthesized by oneself and used, the HLB can be determined according to a known method. Examples of the method for calculating the HLB include Atlas method, Griffin method, Davies method, and Kawakami method, and also include a method in which the HLB is determined from the retention time in high-performance liquid chromatography. For example, (i) in a case where the compositional ratio of fatty acid esters as a mixture synthesized is clear, the HLB of such each fatty acid ester is calculated by Griffin method, and then the weighted average can be regarded as the HLB of the fatty acid esters, and (ii) in a case where the compositional ratio of the fatty acid esters is not clear, the HLB of the fatty acid esters can be determined by comparison with the retention time in high-performance liquid chromatography (HPLC) of a fatty acid ester sample having a known HLB.

Examples of the beverage of the present embodiment can include coffee, a coffee beverage, a soft drink with coffee, a tea beverage, a cocoa beverage, a corn soup, a milk beverage, an almond beverage, an oat beverage, a coconut beverage, rice milk, cashew nut milk, hemp milk, pea milk, a walnut beverage, soymilk, pistachio milk, barley milk, macadamia milk, and a fruit juice drink.

The beverage of the present embodiment is preferably coffee, a coffee beverage, a soft drink with coffee, a tea beverage, a cocoa beverage, an almond beverage, or an oat beverage, pea milk, further preferably a coffee beverage, a tea beverage, an almond beverage, or an oat beverage, and particularly preferably a coffee beverage, from the viewpoint of the taste.

Coffee or a coffee beverage usually contains a coffee component. The coffee component here used can be usually a coffee component derived from a coffee extract liquid. Any coffee beans can be used as coffee beans for production of the coffee extract liquid, examples include the Arabica variety of Brazil, Columbia, Peru, and Kilimanjaro, and the Robusta variety of Indonesia and Uganda, and these can be used singly or as a mixture of a plurality thereof. Roasting conditions, milling conditions, extraction conditions, and the like of the coffee beans can be selected as appropriate.

The amount of the coffee extract liquid blended is not particularly restricted, and the coffee extract liquid is usually used so that the solid content in the coffee extract liquid in the beverage is about 0.3 to 1.5% by mass in the beverage of the present embodiment. The solid content in the coffee extract liquid can have the same meaning as the Brix value of the coffee extract liquid.

Examples of the black tea component in the black tea beverage can include a liquid (black tea leaf extract liquid) obtained by extracting black tea leaves, a concentrated liquid (black tea leaf-concentrated liquid) obtained by concentrating the black tea leaf extract liquid, a dried product (black tea leaf-dried product) obtained by drying the black tea leaf extract liquid, and a dried product (black tea leaf-concentrated/dried product) obtained by drying the black tea leaf-concentrated liquid.

### <Method for producing oil-in-water emulsion composition>

An oil-in-water emulsion composition according to one embodiment of the present invention is produced as described below, for example.

First, performed is a mixing step of mixing, an oil- and fat-containing component such as plant oil-and-fat, a pea protein and/or a fava protein, a sucrose fatty acid ester, and an optional blending agent component, if necessary, with water or the like, to prepare a mixed liquid.

Next, an emulsification step of emulsifying the obtained mixed liquid is performed. As the emulsification method, a homogeneous emulsification method usually used for foods is applicable. Examples include a method with a homogenizer, a method with a colloid mill, and a method with a homomixer. This homogeneous emulsification treatment is usually performed under a condition of 40 to 80°C.

The emulsification step may be performed only once, or may be performed twice or more (multiple times).

The emulsification step being performed multiple times refers to an operation being performed multiple times, in which the operation includes introducing a treatment object into an emulsification instrument to perform emulsification treatment under predetermined conditions, and then taking out the emulsified object. Here, the emulsification instruments used in each of the multiple emulsification treatment may be the same or different.

The emulsification step is preferably performed twice or more for producing the oil-in-water emulsion composition according to one embodiment of the present invention, from the viewpoint of emulsification stability.

In the case of mass production in factories, the emulsification treatment is preferably high-pressure emulsification treatment that has a higher production efficiency and a larger treatment capacity per hour.

The high-pressure emulsification treatment is, for example, treatment in which a treatment object in a high-pressure state made by liquid sending to a narrow and homogeneous valve gap, flow path, nozzle, or the like with a pump is reduced in pressure at once, to provide the difference in pressure, the energy due to this pressure difference increases the flow rate, to allow the treatment object to collide with the valve or a ring, or the other treatment objects at a high speed, thereby providing turbulent flow, cavitation, and/or shear force, and the energy here is used to divide and emulsify the treatment object.

Specifically, the high-pressure emulsification means that emulsification is made in a state where the treatment pressure at the time of the high-pressure emulsification in the case of a one-stage system, or the treatment pressure at the time of such high-pressure emulsification of at least one stage in the case of a multi-stage system such as a two-stage system is preferably 10 MPa or more, more preferably 15 MPa or more. The treatment pressure in the emulsification treatment is preferably higher because the oil-and-fat can be uniformly emulsified and dispersed as a sufficiently fine minute particle.

The upper limit of the treatment pressure is not particularly restricted in terms of emulsification stability, and it is usually 200 MPa or less in terms of pressure resistance of an emulsification instrument used and industrially practical use. The treatment pressure is preferably 100 MPa or less, more preferably 80 MPa or less, further preferably 50 MPa or less, and most preferably 45 MPa or less.

Examples of a commercially available emulsification instrument used in the high-pressure emulsification treatment include valve type instruments such as GAURIN 125T and 132T manufactured by SPX, and HV-5H and HV-5E manufactured by IZUMI FOOD MACHINERY, nozzle type instruments such as Nanovater manufactured by YOSHIDA KIKAI CO., LTD. and STAR BURST 100 manufactured by SUGINO MACHINE LIMITED, and chamber type instruments such as Microfluidizer manufactured by Powrex Corp.

The treatment capacity per hour in the high-pressure emulsification treatment is usually 0.1 tons/hour or more, preferably 1 ton/hour or more, more preferably 5 tons/hour or more, and most preferably 10 tons/hour or more, and when a treatment capacity is set within the above range, the high-pressure emulsification treatment can be carried out without any reduction in production efficiency. The upper limit of the treatment capacity per hour in the high-pressure emulsification treatment is not particularly limited, and is usually 500 tons/hour or less.

While the emulsification treatment time with respect to each treatment differs depending on the throughput and the treatment pressure, it is usually 0.005 hours or more, preferably 0.01 hours or more, most preferably 0.1 hours or more, and usually 20 hours or less, preferably 10 hours or less, more preferably 5 hours or less, particularly preferably 2 hours or less, most preferably 1 hour or less, in order to obtain favorable emulsification stability without deteriorating productivity particularly in the case of mass production in factories.

The temperature in the high-pressure emulsification treatment is usually 30°C or more, preferably 40°C or more, more preferably 50°C or more, and usually 100°C or less, preferably 90°C or less, more preferably 80°C or less. The treatment temperature is preferably equal to or more than the above lower limit, in terms of emulsification efficiency, and the treatment temperature is preferably equal to or less than the above upper limit, in terms of handleability of an emulsified liquid. The treatment temperature of each treatment can be different or the same.

The pH of the treatment object in the emulsification treatment is usually 5.0 or more, preferably more than 5.0, more preferably 5.2 or more, further preferably 5.5 or more, particularly preferably 6.0 or more, and usually 9.0 or less, preferably 8.0 or less, from the viewpoint that the emulsifier to be used is sufficiently dispersed to efficiently emulsify the oil-and-fat. The pH of the treatment object can be adjusted by adding a pH adjuster such as soda or phosphate, and/or any other additive to the treatment object.

For example, a preliminary emulsification step can be performed before the emulsification step of performing the high-pressure emulsification treatment, in the method for producing the oil-in-water emulsion composition. Such a step can be performed with a paddle mixer, a homomixer, an ultrasonic homogenizer, a colloid mill, a kneader, an in-line mixer, a static mixer, Onlator, or the like.

This preliminary emulsification can be performed in a low or ordinary pressure condition. The temperature is usually 30°C or more, preferably 40°C or more, more preferably 50°C or more, and usually 100°C or less, preferably 90°C or less, more preferably 80°C or less. The treatment time is usually 0.005 hours or more, preferably 0.01 hours or more, and on the other hand is usually 20 hours or less, preferably 10 hours or less. In other words, the treatment time is usually 0.005 to 20 hours, preferably 0.01 to 10 hours.

After the emulsification step, a sterilization treatment step such as UHT sterilization and/or retort sterilization is performed. The retort sterilization is usually performed in conditions of 110 to 140°C, for example, 121°C, and 10 to 40 minutes. On the other hand, the UHT sterilization used in a beverage for PET bottles, and the like, is ultra-high temperature sterilization at a higher temperature, for example, a sterilization temperature of 120 to 150°C, corresponding to a sterilization value (Fo) at 121°C of 10 to 50. The UHT sterilization can be performed by a known method, for example, with a direct heating system such as a steam injection system in which steam is directly blown into the beverage or a steam infusion system in which the beverage is sprayed into steam and then heated, or an indirect heating system using a surface heat exchanger such as a plate or a tube, and, for example, a plate-type sterilizer can be used.

The resulting emulsion composition can be packed in a can, a bottle, a PET bottle, a paper pack, a plastic package, or the like. Such a packed product can be subjected to distribution.

### <Method for producing beverage>

A known method is used as the method for producing a beverage according to one embodiment of the present invention. For example, a step of blending and mixing the emulsion composition obtained above, with other material for beverages, is included. The resulting mixture can be adopted to obtain a beverage according to one embodiment of the present invention through the same steps as the emulsification step and the sterilization step of the emulsion composition.

The beverage produced is suitable for a packaged beverage, and can be applied to, for example, a can beverage, a PET bottle beverage, a carton beverage, a bottled beverage, and a plastic packaged beverage.

### EXAMPLES

Hereinafter, the present invention is further specifically described with reference to Examples, but the present invention is not limited to such Examples described below as long as it does not exceed the gist thereof. Herein, the expression "%" means "% by mass" unless particularly noted.

### [Raw materials]

Raw materials used in preparation of beverages in the following Examples and Comparative Examples are as follows.

### <Pea protein, fava protein>

Pea protein: Empro (registered trademark) E86HV manufactured by Emsland
Fava protein: Fava Protein Powder manufactured by Bio Actives Japan Corporation
The molecular weight of the pea protein, measured by electrophoresis with SDS-PAGE, is 500 to 90000.

### <Casein Na>

TATUA 100 manufactured by TATUA JAPAN

### <Sucrose fatty acid esters>

S-970: sucrose stearic acid ester "RYOTO Sugar Ester S-970" (HLB:9, ratio of monoester 50%) manufactured by Mitsubishi Chemical Corporation
S-770: sucrose stearic acid ester "RYOTO Sugar Ester S-770" (HLB:7, ratio of monoester 40%) manufactured by Mitsubishi Chemical Corporation
S-570: sucrose stearic acid ester "RYOTO Sugar Ester S-570" (HLB:5, ratio of monoester 30%) manufactured by Mitsubishi Chemical Corporation
S-370: sucrose stearic acid ester "RYOTO Sugar Ester S-370" (HLB:3, ratio of monoester 20%) manufactured by Mitsubishi Chemical Corporation
S-170: sucrose stearic acid ester "RYOTO Sugar Ester S-170" (HLB:1, ratio of monoester 1%) manufactured by Mitsubishi Chemical Corporation
P-170: sucrose palmitic acid ester "RYOTO Sugar Ester P-170" (HLB:1, ratio of monoester 1%) manufactured by Mitsubishi Chemical Corporation
P-1670: sucrose palmitic acid ester "RYOTO Sugar Ester P-1670" (HLB:16) manufactured by Mitsubishi Chemical Corporation

### <Organic acid monoglyceride>

DATEM: diacetyl tartaric acid ester of monoglyceride "DATEM 517K" manufactured by Danisco

### <Oil and fat>

Extremely hydrogenated coconut oil (content of saturated fatty acid 99% by mass)

### <Other components>

Soda: manufactured by FUJIFILM Wako Pure Chemical Corporation
Bovine milk: manufactured by MEGMILK SNOW BRAND Co., Ltd.
Powdered skim milk: manufactured by Yotsuba Milk Products Co., Ltd.
Granulated sugar: manufactured by Nisshin Sugar Co., Ltd.
Coffee beans: Columbia EX L = 20.5, manufactured by ALLIED COFFEE ROASTERS CO., LTD.

### [Examples 1 to 8 and 13 to 15, and Comparative Examples 1 to 3, 5 and 6]

Components described in Table 1 were mixed and dissolved so that the contents described in Table 1 were achieved, and water was added thereto, to make the total amount 100% by mass. The liquid was heated to 70°C, homogenized with a high-pressure homogenizer at a pressure of 25 MPa three times, and then sterilized at 85°C for 10 minutes, whereby each oil-in-water emulsion composition was prepared. The pH of the oil-in-water emulsion composition after sterilization was 6.8 to 7.4.

**Table 1**

| | Content in oil-in-water type emulsion composition (%) | | | | | | | | | | | |
|---|---|---|---|---|---|---|---|---|---|---|---|---|
| | Oil and fat | Pea protein | Fava protein | Casein Na | Sucrose fatty acid ester | | | | | | Organic acid monoglyc eride | pH Adjuster |
| | | | | | S-970 | S-770 | S-570 | S-370 | P-170 | S-170 | | |
| Example 1 | 35 | 0.2 | 0 | 0 | 0 | 1.2 | 0 | 0.15 | 0 | 0 | 0.15 | 0.025 |
| Example 2 | 35 | 0.4 | 0 | 0 | 0 | 1.2 | 0 | 0.15 | 0 | 0 | 0.15 | 0.025 |
| Example 3 | 40 | 0.2 | 0 | 0 | 0 | 1.5 | 0 | 0.18 | 0 | 0 | 0.2 | 0.025 |
| Example 4 | 45 | 0.2 | 0 | 0 | 0 | 2 | 0 | 0.2 | 0 | 0 | 0.2 | 0.025 |
| Example 5 | 35 | 0.2 | 0 | 0 | 0 | 1.2 | 0 | 0 | 0 | 0 | 0.15 | 0.025 |
| Example 6 | 35 | 0.2 | 0 | 0 | 0 | 0 | 1.2 | 0 | 0 | 0 | 0.15 | 0.025 |
| Example 7 | 35 | 0.2 | 0 | 0 | 0 | 0 | 1.2 | 0.4 | 0 | 0 | 0.15 | 0.025 |
| Example 8 | 35 | 0 | 0.2 | 0 | 0 | 1.2 | 0 | 0.15 | 0 | 0 | 0.15 | 0.025 |
| Example 13 | 35 | 0.2 | 0 | 0 | 0 | 1.2 | 0 | 0.15 | 0.2 | 0 | 0.15 | 0.025 |
| Example 14 | 35 | 0.2 | 0 | 0 | 0 | 1.2 | 0 | 0.15 | 0.4 | 0 | 0.15 | 0.025 |
| Example 15 | 35 | 0.2 | 0 | 0 | 0 | 1.2 | 0 | 0.15 | 0.6 | 0 | 0.15 | 0.025 |
| Comparative Example 1 | 35 | 0 | 0 | 0 | 0 | 1.2 | 0 | 0.15 | 0 | 0 | 0.15 | 0.025 |
| Comparative Example 2 | 45 | 0.2 | 0 | 0 | 2 | 0 | 0 | 0 | 0 | 0 | 0.2 | 0.025 |
| Comparative Example 3 | 35 | 0.2 | 0 | 0 | 0 | 0 | 0 | 0 | 0 | 1.2 | 0.15 | 0.025 |
| Comparative Example 5 | 35 | 1.5 | 0 | 0 | 0 | 0.5 | 0 | 0.1 | 0 | 0 | 0.15 | 0.025 |
| Comparative Example 6 | 45 | 0 | 0 | 0.2 | 0 | 2 | 0 | 0.2 | 0 | 0 | 0.2 | 0.025 |

Table 2 shows results of the following evaluation for each oil-in-water emulsion composition obtained.

The sucrose fatty acid monoester ratio in the sucrose fatty acid ester and the content ratio (mass ratio) of the pea protein or the fava protein with respect to the sucrose fatty acid ester in each oil-in-water emulsion composition obtained were shown in Table 2.

### [Evaluation method of each oil-in-water emulsion composition]

### <Median size>

Each oil-in-water emulsion composition was prepared, and then the median size was measured with a laser diffraction/scattering type particle size distribution measurement apparatus (manufactured by HORIBA Ltd.).

### <Stability after storage>

Creaming/separation: each oil-in-water emulsion composition was stored at 5°C for 4 weeks, and the state of generation of creaming and separation was visually observed.

Good: neither creaming, nor separation were observed, and high fluidity was observed.

Poor: creaming or separation were observed.

### <Distribution stability>

Ten g of each oil-in-water emulsion composition was placed in a plastic package having a diameter of 3.5 cm, and shaken with a shaker (MIX-EVR, manufactured by TAITEC CORPORATION) in conditions of 10°C and 2000 rpm. The fluidity of each oil-in-water emulsion composition after 5 hours from the start of shaking was evaluated according to the following criteria.
1: solidified, and problematic in terms of quality.
2: highly viscous, and problematic in terms of quality.
3: viscous, but little problematic in terms of quality.
4: slightly viscous, but not problematic in terms of quality.
5: highly fluid, and not problematic in terms of quality.

**Table 2**

| | Ratio of monoester (%) | Blending ratio (mass ratio) of pea protein or fava protein with respect to sucrose fatty acid ester | Median size (µm) immediatel y after preparation | Stability after storage | Distrib ution stabilit y |
|---|---|---|---|---|---|
| Example 1 | 37.8 | 1:6.75 | 1.55 | Good | 5 |
| Example 2 | 37.8 | 1:3.375 | 0.99 | Good | 5 |
| Example 3 | 37.9 | 1:8.4 | 0.91 | Good | 4 |
| Example 4 | 38.2 | 1:11 | 0.99 | Good | 3 |
| Example 5 | 40.0 | 1:6 | 1.28 | Good | 4 |
| Example 6 | 30.0 | 1:6 | 2.01 | Good | 3 |
| Example 7 | 27.5 | 1:8 | 0.99 | Good | 3 |
| Example 8 | 37.8 | 1:6.75 | 0.99 | Good | 4 |
| Example 13 | 33.0 | 1:7.75 | 0.85 | Good | 5 |
| Example 14 | 29.4 | 1:8.75 | 0.79 | Good | 4 |
| Example 15 | 26.5 | 1:9.75 | 0.84 | Good | 4 |
| Comparative Example 1 | 37.8 | - | 0.43 | Good | 2 |
| Comparative Example 2 | 50.0 | 1:10 | 0.76 | Good | 1 |
| Comparative Example 3 | 1.0 | 1:6 | 5.12 | Good | 1 |
| Comparative Example 5 | 36.7 | 1:0.4 | 0.52 | Good | 2 |
| Comparative Example 6 | 38.2 | - | 0.44 | Good | 2 |

### [Examples 9 to 12 and Comparative Example 4]

After the pH was adjusted by adding soda dissolved in hot water in advance to a coffee extract liquid extracted by adding hot water in an amount ten times to coffee beans, components described in Table 3 were added, mixed, and dissolved so that the contents described in Table 3 were achieved, and furthermore, water was added to make the total amount 100% by mass. The liquid was heated to 65°C, homogenized with a high-pressure homogenizer at a pressure of 20 MPa, then packed and tightly sealed in a can package, and subjected to retort sterilization at 121°C for 30 minutes, whereby canned milk coffee was prepared. The pH of the beverage after sterilization was 6.6 to 6.8.

**Table 3**

| | | | Example 9 | Example 10 | Example **11** | Example 12 | Comparative Example 4 |
|---|---|---|---|---|---|---|---|
| | Cofee | | 0.875 | 0.875 | 0.875 | 0.875 | 0.875 |
| | Soda | | 0.1 | 0.1 | 0.1 | 0.1 | 0.1 |
| | Granulated sugar | | 5.0 | 5.0 | 5.0 | 5.0 | 5.0 |
| | Bovine milk | | 18.0 | 18.0 | 18.0 | 18.0 | 18.0 |
| | Powdered skim milk | | 0.4 | 0.4 | 0.4 | 0.4 | 0.4 |
| Compo nent in bevera ge | Oil-in-water emulsion composition prepared in Example 1 | % by mass | 1.8 | | | | |
| | Oil-in-water emulsion composition prepared in Example 2 | | | 1.8 | | | |
| | Oil-in-water emulsion composition prepared in Example 3 | | | | 1.575 | | |
| | Oil-in-water emulsion composition prepared in Example 8 | | | | | 1.8 | |
| | Oil-in-water emulsion composition prepared in Comparative Example 1 | | | | | | 1.8 |
| | Sucrose fatty acid ester (P-1670) | ppm | 600 | 600 | 600 | 600 | 600 |

Each beverage obtained was evaluated as follows, and the results were shown in Table 4.

### [Evaluation method of each beverage]

### <Stability and taste in beverage>

Each canned milk coffee was stored at 55°C for 4 weeks, and thereafter left to still stand at 5°C overnight. On the next day, the can was opened and the content fluid was transferred to a cup, and the state of generation of oil grains was visually observed to evaluate stability according to the following criteria. Whether or not an off-flavor (abnormal odor due to degradation or the like) of the content fluid occurred was evaluated.
1: cream stripe and oil grains were observed.
2: cream stripe and oil grains were slightly observed.
3: cream stripe and oil grains were hardly observed.

**Table 4**

| | **Stability after storage** | **Generation of off-flavor** |
|---|---|---|
| **Example 9** | **3** | No |
| **Example 10** | **3** | No |
| **Example 11** | **2** | No |
| **Example 12** | **2** | No |
| **Comparative Example 4** | **1** | No |

It was found from the results in Table 2 that an emulsion composition containing water, an oil-and-fat, a pea protein and/or a fava protein, and a sucrose fatty acid ester having a sucrose fatty acid monoester ratio in the sucrose fatty acid ester, of 3 to 45% by mass, at specific proportions was excellent in emulsification stability even after long-term storage and high in distribution stability in spite of a slightly large median size.

On the contrary, there was room for improvement in distribution stability, in Comparative Examples 1 and 6 where neither a pea protein, nor a fava protein was contained, Comparative Example 2 where the sucrose fatty acid monoester ratio in the sucrose fatty acid ester exceeded 45% by mass, Comparative Example 3 where the sucrose fatty acid monoester ratio in the sucrose fatty acid ester was less than 3% by mass, and Comparative Example 5 where the amount of the sucrose fatty acid ester was less than 1 based on a total amount of 1 part by mass of the pea protein and the fava protein.

It was found from the results in Table 4 that a beverage including water, an oil-and-fat, a pea protein and/or a fava protein, and a sucrose fatty acid ester having a sucrose fatty acid monoester ratio in the sucrose fatty acid ester, of 3 to 45% by mass, at specific proportions had a high stability at high temperature.

On the contrary, there was room for improvement in stability at high temperature, in Comparative Example 4 where an emulsion composition containing a sucrose fatty acid ester having a sucrose fatty acid monoester ratio of 0% by mass was included.

## Claims

1. An oil-in-water emulsion composition comprising water, an oil-and-fat, a pea protein and/or a fava protein, and a sucrose fatty acid ester, wherein the sucrose fatty acid ester has a ratio of a sucrose fatty acid monoester with respect to the total sucrose fatty acid ester of 3 to 45% by mass, and an amount of the sucrose fatty acid ester is 1 to 30 parts by mass with respect to 1 part by mass of a total amount of the pea protein and the fava protein.

2. The oil-in-water emulsion composition according to claim 1, wherein a content of a milk protein is 0.5% by mass or less.

3. The oil-in-water emulsion composition according to claim 1 or 2, containing no milk protein.

4. The oil-in-water emulsion composition according to any one of claims 1 to 3, for a beverage.

5. The oil-in-water emulsion composition according to any one of claims 1 to 4, wherein a content of a saturated fatty acid in a constituent fatty acid of the oil-and-fat is 80% by mass or more.

6. The oil-in-water emulsion composition according to any one of claims 1 to 5, wherein the oil-and-fat has a content of 25 to 50% by mass.

7. The oil-in-water emulsion composition according to any one of claims 1 to 6, further comprising a glycerin fatty acid ester.

8. A beverage comprising the oil-in-water emulsion composition according to any one of claims 1 to 7.

9. A beverage comprising 0.2 to 42% by mass of the oil-in-water emulsion composition according to any one of claims 1 to 7.

10. A beverage comprising water, an oil-and-fat, a pea protein and/or a fava protein, and a sucrose fatty acid ester, wherein the sucrose fatty acid ester has a ratio of a sucrose fatty acid monoester with respect to the total sucrose fatty acid ester of 3 to 45% by mass, and an amount of the sucrose fatty acid ester is 1 to 30 parts by mass with respect to 1 part by mass of a total amount of the pea protein and the fava protein.
